# EUROPEAN PATENT SPECIFICATION

(11) **EP 3 054 048 B1**
(45) Date of publication and mention of the grant of the patent: **31.10.2018**
(21) Application number: 14847139.4
(22) Date of filing: 24.09.2014
(51) Int. Cl.: D06N 3/00, D06N 3/18

(54) **NAPPED ARTIFICIAL LEATHER AND MANUFACTURING METHOD THEREFOR**
NAPPA-KUNSTLEDER UND HERSTELLUNGSVERFAHREN DAFÜR
CUIR ARTIFICIEL LAINÉ ET SON PROCÉDÉ DE FABRICATION

(30) Priority: 30.09.2013 JP 2013205266
(43) Date of publication of application: 10.08.2016
(73) Proprietor: Kuraray Co., Ltd., Okayama 710-0801 (JP)
(72) Inventor: ASHIDA, Tetsuya, Osaka 530-8611 (JP); OGAWARA, Osamu, Osaka 530-8611 (JP)
(74) Representative: Vossius & Partner Patentanwälte Rechtsanwälte mbB
(86) International application number: PCT/JP2014/004868
(87) International publication number: WO 2015/045367

(56) References cited:
- EP-A1- 1 353 006
- EP-A1- 1 431 446
- WO-A1-2009/157063
- JP-A- H0 881 886
- JP-A- S4 877 001
- JP-A- S5 943 158
- JP-A- S57 154 468
- JP-A- 2011 074 541
- US-A1- 2009 053 948

## Description

### [Technical Field]

The present invention relates to a napped artificial leather for use as a surface material for clothing, shoes, articles of furniture, car sheets, general merchandise, and the like. More particularly, the invention relates to a napped artificial leather that has excellent pilling resistance, i.e., that is less likely to cause pilling, which is a phenomenon in which fibers on the surface are fuzzed due to friction or the like and the fuzzed fibers are entangled to form small spherical masses.

### [Background Art]

Napped artificial leathers such as a suede-like artificial leather and a nubuck-like artificial leather are conventionally known.

For example, PTL 1 below discloses a method of producing a nubuck-like artificial leather that provides dense fluff and fine creases. Specifically, PTL 1 discloses a method of producing a nubuck-like artificial leather in which, when an artificial leather substrate containing an elastic polymer inside an ultrafine fiber-entangled non-woven fabric is finished into a napped artificial leather, the following steps are performed in order applying a solvent capable of swelling or dissolving the elastic polymer to one surface of the artificial leather substrate; napping at least the one surface to form a napped surface; applying the elastic polymer to the napped surface; and further napping the surface to which the elastic polymer has been applied.

EP1431446 discloses a nubuck-like artificial leather having a natural leather appearance and good abrasion resistance. The leather-like sheet comprises a base material of a three-dimensionally entangled non-woven fabric comprised of ultra-fine fibers with fineness of <= 0.5 dtex impregnated with a porous polymeric elastomer. The sheet further has nap portions comprising ultra-fine fibers and grain side portions comprising a non-porous elastic polymer randomly distributed on one surface of the base material. The artificial leather sheet is manufactured by first applying a penetrant (surfactant) to the napped surface and then applying discontinuously an aqueous emulsion of an elastic polymer to the napped surface.

EP1353006 discloses a method for producing synthetic leather, wherein a felt of sea/island fibers is thermally stabilised, impregnated with an aqueous polyurethane emulsion, coagulated, the sea component is removed. Thereafter the felt is impregnated again with an aqueous polyurethane emulsion or a polyurethane in an organic solvent, coagulated, and finished.

JP2011074541 discloses a napped artificial leather having high pilling resistance and a method for manufacturing such napped artificial leather. The napped artificial leather has a non-woven fabric structure consisting of fiber bundles of ultrafine fibers formed by removing a water-soluble resin from a composite fiber containing said water-soluble resin. To obtain a high pilling resistance an aqueous dispersion of a polymeric elastomer is applied to the napped artificial leather.

### [Citation List]

### [Patent Literature]

Patent Literature 1: Japanese Laid-Open Patent Publication No. 2007-262616

### [Summary of Invention]

### [Technical Problem]

The conventional napped artificial leathers tend to cause pilling. Pilling is problematic in that it degrades the appearance. It is an object of the present invention to provide a napped artificial leather having excellent pilling resistance.

### [Solution to Problem]

An aspect of the present invention relates to a production method of a napped artificial leather, including the steps of: providing a fiber sheet including a non-woven fabric of ultrafine fibers with a fineness of 1 dtex or less that has been impregnated with a first elastic polymer; napping one or both surfaces of the fiber sheet to form a napped surface thereon; applying, to the napped surface, a resin solution containing a second elastic polymer having solubility in a predetermined solvent; and applying the predetermined solvent to the surface to which the resin solution is applied.

Another aspect of the present invention relates to a napped artificial leather including a fiber sheet obtained by impregnating a first elastic polymer into a non-woven fabric that is an entangled body of ultrafine fibers with a fineness of 1 dtex or less, wherein the fiber sheet includes, on one or both surfaces thereof, a napped surface obtained by the ultrafine fibers, and further includes a second elastic polymer that is fixed to basal portions of the napped ultrafine fibers and is unevenly distributed on sheet, wherein the first elastic polymer has insolubility in a predetermined solvent corresponding to a surface layer of the fiber a rate of dissolution of 30% or less, and the second elastic polymer has a solubility in the solvent corresponding to a rate of dissolution of 70% or more.
Such a napped artificial leather has excellent pilling resistance.

### [Advantageous Effects of Invention]

According to the present invention, it is possible to obtain a napped artificial leather having high pilling resistance.

### [Brief Description of Drawings]

FIG. 1 is a schematic cross-sectional view, in the thickness direction, of a napped artificial leather according to an embodiment of the present invention.
FIG. 2 is an SEM image showing a cross section, in the thickness direction, of a napped artificial leather obtained in Example 1, showing the vicinity of a surface layer.

### [Description of Embodiment]

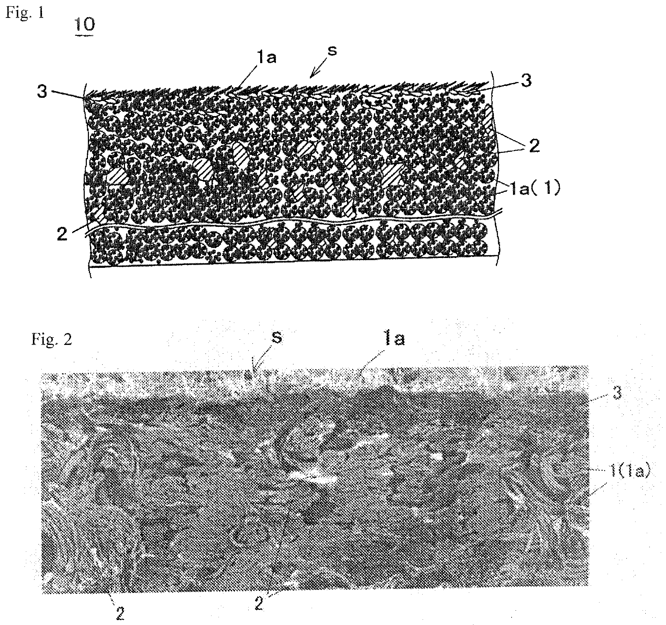

First, a napped artificial leather according to an embodiment of the present invention will be described with reference to the drawings. FIG. 1 is a schematic diagram of a cross section, in the thickness direction, of a napped artificial leather 10 according to the present embodiment.

As shown in the schematic cross-sectional view in FIG 1, the napped artificial leather 10 includes a non-woven fabric 1 that is an entangled body of ultrafine fibers 1a with a fineness of 1 dtex or less. The non-woven fabric 1 is formed as a fiber bundle, for example. A first elastic polymer 2 is provided in the internal voids of an inner layer of the non-woven fabric 1. The first elastic polymer 2 imparts fullness to the non-woven fabric 1. The outer side of the non-woven fabric 1 has a napped surface S on which napped ultrafine fibers 1a are present. Also, a second elastic polymer 3 is fixed to the basal portions of the napped ultrafine fibers.

The napped artificial leather according to the present embodiment will now be described in detail, in conjunction with an exemplary production method thereof.

The napped artificial leather of the present embodiment can be obtained by a production method including the steps of: providing a fiber sheet including a non-woven fabric of ultrafine fibers with a fineness of 1 dtex or less that has been impregnated with a first elastic polymer; napping one or both surfaces of the fiber sheet to form a napped surface thereon; applying, to the napped surface, a resin solution containing a second elastic polymer having solubility in a predetermined solvent; and applying the predetermined solvent to the surface to which the resin solution is applied.

In the production method of a napped artificial leather according to the present embodiment, first, a fiber sheet is produced by impregnating a first elastic polymer into a non-woven fabric that is an entangled body of ultrafine fibers with a fineness of 1 dtex or less.

In the production of the non-woven fabric, first, a fiber web of ultrafine fiber-generating fibers is produced. Examples of the production method of the fiber web include a method involving melt-spinning ultrafine fiber-generating fibers and directly collecting the resultant fibers as filaments (continuous fibers) without intentionally cutting them, and a method involving cutting the resultant fibers into staples and subjecting them to a known entangling treatment. Here, "filaments" are fibers that have not been subjected to cutting. From the viewpoint of sufficiently increasing the fiber density, the length of the filaments is preferably 100 mm or more, more preferably 200 mm or more. The upper limit for the length of the filaments is not particularly limited, and may be several meters, several hundred meters, several kilometers, or longer, and continuously spun. Among these, it is particularly preferable to produce a filament web of ultrafine fiber-generating fibers from the viewpoint of obtaining a napped artificial leather that is less likely to cause falling out of fibers and has excellent pilling resistance. In the present embodiment, the production of a filament web of ultrafine fiber-generating fibers will be described in detail as a representative example.

Here, "ultrafine fiber-generating fiber" refers to a fiber that forms an ultrafine fiber with a small fineness as a result of being subjected to a chemical or physical post-treatment after being spun. Specific examples thereof include an island-in-the-sea composite fiber in which an island component polymer serving as a domain different from a sea component polymer serving as the matrix is dispersed in the sea component polymer on the fiber cross section, and the sea component is later removed to form a fiber bundle-like ultrafine fiber composed mainly of the island component polymer, and a strip/division-type composite fiber in which a plurality of different resin components are alternately disposed around the periphery of a fiber to form a petaline shape or a superposed shape, and the fiber is divided as a result of the resin components being stripped from the fiber by a physical treatment, thereby forming a bundle-like ultrafine fiber. The use of the island-in-the-sea composite fiber can prevent damage to the fibers such as cracking, bending, and breaking during an entangling treatment, which will be described below. In the present embodiment, the formation of ultrafine fibers by using the island-in-the-sea composite fiber will be described in detail as a representative example.

The island-in-the-sea composite fiber is a multicomponent composite fiber composed of at least two polymers, and has a cross section on which an island component polymer is dispersed in a matrix composed of a sea component polymer. A filament web of the island-in-the-sea composite fiber is formed by melt-spinning the island-in-the-sea composite fiber and directly collecting the resultant fiber as a filament on a net without cutting it.

The island component polymer is not particularly limited so long as it is a polymer capable of forming an ultrafine fiber. Specific examples thereof include polyester resins such as polyethylene terephthalate (PET), polytrimethylene terephthalate (PTT), polybutylene terephthalate and an elastic polymer or modified products thereof with isophthalic acid or the like; polyamide resins such as polyamide 6, polyamide 66, polyamide 610, polyamide 12, an aromatic polyamide, a semi-aromatic polyamide, an elastic polymer or modified products thereof; polyolefin resins such as polypropylene; and polyurethane resins such as a polyester polyurethane. Among these, polyester resins such as PET, PTT, PBT and modified polyesters thereof are preferable in that they are easily shrinkable by a heat treatment and thus can provide a napped artificial leather having fullness. Also, polyamide resins such as polyamide 6 and polyamide 66 are preferable in that they can provide an ultrafine filament having hygroscopicity and pliability as compared with those obtained by polyester resins, and thus can provide a napped artificial leather having fluffiness and a soft texture.

As the sea component polymer, a polymer having higher solubility in a solvent or higher decomposability by a decomposition agent than those of the island component polymer is selected. Also, a polymer having low affinity for the island component polymer and a smaller melt viscosity and/or surface tension than the island component polymer under the spinning condition is preferable in terms of the excellent stability in spinning of the island-in-the-sea composite fiber. Specific examples of the sea component polymer satisfying such conditions include a water-soluble polyvinyl alcohol resin (water-soluble PVA), polyethylene, polypropylene, polystyrene, an ethylene-propylene copolymer, an ethylene-vinyl acetate copolymer, a styrene-ethylene copolymer, and a styrene-acrylic copolymer. Among these, the water-soluble PVA is preferable in that it can be removed by dissolution by using an aqueous medium without using an organic solvent and thus has a low environmental load.

The island-in-the-sea composite fiber can be produced by melt spinning in which the sea component polymer and the island component polymer are melt-extruded from a multicomponent fiber spinning spinneret. The temperature of the multicomponent fiber spinning spinneret is not particularly limited so long as it is a temperature at which melt spinning can be performed and is higher than both the melting points of the sea component polymer and the island component polymer, but is usually selected from the range of 180 to 350°C.

The fineness of the island-in-the-sea composite fiber is not particularly limited, but is preferably 0.5 to 10 dtex, more preferably 0.7 to 5 dtex. An average area ratio between the sea component polymer and the island component polymer on the cross section of the island-in-the-sea composite fiber is preferably 5/95 to 70/30, more preferably 10/90 to 50/50. The number of domains of the island component on the cross section of the island-in-the-sea composite fiber is not particularly limited, but is preferably about 5 to 1000, more preferably about 10 to 300, from the viewpoint of the industrial productivity.

The molten island-in-the-sea composite fiber discharged from the spinneret is cooled by a cooling apparatus, and is further drawn out and attenuated with a high-velocity air stream at a velocity corresponding to a take-up speed of 1000 to 6000 m/min by a suction apparatus such as an air jet nozzle so as to have a desired fineness. Then, the drawn and attenuated filaments are piled on a collection surface of a movable net or the like, thereby obtaining a filament web. Note that, in order to stabilize the shape, a part of the filament web may be further pressure-bonded by pressing the filament web if necessary. The weight per area of the filament web thus obtained is not particularly limited, but is preferably in the range of 10 to 1000 g/m², for example.

Then, the obtained filament web is subjected to an entangling treatment, thereby producing an entangled web.

Specific examples of the entangling treatment for the filament web include a treatment in which a plurality of layers of filament webs are superposed in the thickness direction by using a cross lapper or the like, and subsequently needle-punched simultaneously or alternately from both sides such that at least one barb penetrates the web.

In addition, an oil solution, an antistatic agent, or the like may be added to the filament web in any stage from the spinning step to the entangling treatment of the island-in-the-sea composite fiber. Furthermore, if necessary, the entangled state of the filament web may be densified in advance by performing a shrinking treatment in which the filament web is immersed in warm water at about 70 to 150°C. The fiber density may be increased by performing hot pressing after needle punching so as to provide shape stability. The weight per area of the entangled web thus obtained is preferably in the range of about 100 to 2000 g/m².

If necessary, the entangled web may be subjected to a treatment for increasing the fiber density and the degree of entanglement by heat shrinking the entangled web. Specific examples of the heat shrinking treatment include a method involving bringing the entangled web into contact with water vapor, and a method involving applying water to the entangled web, and subsequently heating the water applied to the entangled web by using hot air or electromagnetic waves such as infrared rays. If necessary, hot pressing may be performed. By performing hot pressing, it is possible to further density the entangled web that has been densified by the heat-shrinking treatment, fix the shape of the entangled web, and smooth the surface thereof.

The change in the weight per area of the entangled web during the heat-shrinking treatment step is preferably 1.1 times (mass ratio) or more, more preferably 1.3 times or more and 2 times or less, further preferably 1.6 times or less, as compared with the weight per area before the shrinking treatment.

Then, the sea component polymer is removed from the island-in-the-sea composite fiber in the entangled web that has been densified, thereby obtaining an ultrafine filament non-woven fabric that is an entangled body of fiber bundle-like ultrafine filaments. As the method for removing the sea component polymer from the island-in-the-sea composite fiber, a method involving treating the entangled web with a solvent or decomposition agent capable of selectively removing only the sea component polymer can be used without any particular limitation. Specifically, in the case of using the water-soluble PVA as the sea component polymer, for example, it is preferable to use hot water as the solvent. In the case of using a modified polyester that is easily decomposed by alkali as the sea component polymer, it is preferable to use an alkaline decomposition agent such as an aqueous sodium hydroxide solution.

In the case of using the water-soluble PVA as the sea component polymer, it is preferable to remove the water-soluble PVA by extraction until the removal rate of the water-soluble PVA becomes about 95 to 100 mass% by treating the web in hot water at 85 to 100°C for 100 to 600 seconds. Note that the water-soluble PVA can be efficiently removed by extraction by repeating a dip-nipping treatment. The use of the water-soluble PVA is preferable in terms of a low environmental load and reduced generation of VOCs since the sea component polymer can be selectively removed without using an organic solvent.

The fineness of the ultrafine fiber formed in this manner is preferably 1 dtex or less, more preferably 0.001 to 1 dtex, further preferably 0.002 to 0.2 dtex.

The weight per area of the ultrafine filament non-woven fabric thus obtained is preferably 140 to 3000 g/m², more preferably 200 to 2000 g/m². The apparent density of the ultrafine filament non-woven fabric is preferably 0.45 g/cm³ or more, more preferably 0.55 g/cm³ or more in that a dense non-woven fabric can be formed, thus obtaining a non-woven fabric with fullness. Although the upper limit is not particularly limited, the apparent density is preferably 0.70 g/cm³ or less in that a pliable texture can be obtained and excellent productivity can also be achieved.

In the production of a napped artificial leather according to the present embodiment, a first elastic polymer is impregnated into the internal voids of the ultrafine filament non-woven fabric before or after generating an ultrafine fiber from an ultrafine fiber-generating fiber such as an island-in-the-sea composite fiber. The first elastic polymer imparts shape stability and fuliness to the non-woven fabric.

Specific examples of the first elastic polymer include polyurethane, an acrylic resin elastic polymer, an acrylonitrile resin elastic polymer, an olefin resin elastic polymer, and a polyester resin elastic polymer. As the first elastic polymer, it is preferable to use an elastic polymer having low solubility in a solvent for dissolving a second elastic polymer, which will be described below, and it is more preferable to use an elastic polymer having low solubility in the solvent as a result of forming a cross-linked structure after being solidified. As such an elastic polymer having low solubility in the aforementioned solvent, it is preferable to use an aqueous polyurethane that forms a cross-linked structure after being solidified.

An aqueous polyurethane refers to a polyurethane emulsion, or a polyurethane that is solidified from a polyurethane dispersion dispersed in an aqueous solvent. The aqueous polyurethane usually has insolubility or low solubility in an organic solvent, and forms a cross-linked structure after being solidified. When the emulsion has thermal gelation properties, the emulsion particles are thermally gelled without migration, thus making it possible to evenly apply the first elastic polymer to the fiber-entangled body.

Examples of the method for impregnating the first elastic polymer into the non-woven fabric include a dry method in which an emulsion, dispersion or solution containing the first elastic polymer is impregnated into an entangled web before generating an ultrafine fiber or a non-woven fabric after generating an ultrafine fiber, followed by drying and solidification, and a method in which the solidification is performed by a wet method. Here, in the case of using an elastic polymer such as an aqueous polyurethane that forms a cross-linked structure after being solidified, a curing treatment in which the polymer is heat-treated after being solidified and dried may be performed in order to promote crosslinking, if necessary.

Examples of the method for impregnating the emulsion, dispersion or solution of the first elastic polymer include dip-nipping in which a treatment of nipping by a press roll or the like to achieve a predetermined impregnated state is performed once or a plurality of times, bar coating, knife coating, roll coating, comma coating, and spray coating.

Note that the first elastic polymer may further contain a colorant such as a dye or a pigment, a coagulation regulator, an antioxidant, an ultraviolet absorber, a fluorescent agent, an antifungal agent, a penetrant, an antifoaming agent, a lubricant a water-repellent agent, an oil-repellent agent, a thickener, a filler, a curing accelerator, a foaming agent, a water-soluble polymer compound such as polyvinyl alcohol or carboxymethyl cellulose, inorganic fine particles, and a conductive agent, so long as the effects of the present invention are not impaired.

The content ratio of the first elastic polymer is preferably 0.1 to 60 mass%, more preferably 0.5 to 60 mass%, particularly preferably 1 to 50 mass%, relative to the mass of the ultrafine fiber, in terms of the good balance between the fullness and the pliability or the like of the resulting napped artificial leather.

In this manner, a fiber sheet that is a non-woven fabric of ultrafine fibers with a fineness of 1 dtex or less that has been impregnated with the first elastic polymer is obtained. The fiber sheet thus obtained is sliced into a plurality of pieces or ground in a direction perpendicular to the thickness direction so as to regulate the thickness thereof if necessary, and is subsequently napped by being buffed on at least one surface by using abrasive paper such as sand paper or emery paper. The number of the abrasive paper is preferably about 120 to 800, more preferably about 320 to 600. In this manner, a napped surface obtained by napping one or both surfaces of the fiber sheet is formed.

The thickness of the napped fiber sheet is not particularly limited, but is preferably 0.2 to 4 mm, more preferably 0.5 to 2.5 mm.

Next, a resin solution containing a second elastic polymer having solubility in a predetermined solvent is applied to the napped surface of the fiber sheet thus obtained, and subsequently the second elastic polymer is solidified.

The second elastic polymer soluble in a predetermined solvent is an elastic polymer that is dissolved in the predetermined solvent in a later step, and subsequently solidified from the dissolved state. As the second elastic polymer, it is possible to use any elastic polymer having solubility in a predetermined organic solvent without any particular limitation.

Specific examples of the second elastic polymer include polyurethane, an acrylic resin elastic polymer, an acrylonitrile resin elastic polymer, an olefin resin elastic polymer, a polyester resin elastic polymer that have solubility in a predetermined organic solvent. As the second elastic polymer, it is possible to use an elastic polymer having solubility in a predetermined organic solvent, and also an elastic polymer that does not form a cross-linked structure after being solidified and thus has solubility in the predetermined organic solvent. As such an elastic polymer having solubility in the predetermined organic solvent, it is preferable to use a solvent-based polyurethane that does not form a cross-linked structure after being solidified.

The solvent-based polyurethane having solubility in an organic solvent refers to a polyurethane obtained by reacting, at a predetermined molar ratio, at least one polymer diol selected from polyester diol, polyether diol, polycarbonate diol and the like having an average molecular weight of, for example, 500 to 3000, at least one diisocyanate selected from aromatic, cycloaliphatic, and aliphatic diisocyanates such as 4,4'-diphenyl methane diisocyanate, isophorone diisocyanate and hexamethylene diisocyanate, and at least one low-molecular weight compound having two or more active hydrogen atoms. If necessary, the polyurethane may be used as a polymer composition to which a polymer such as a synthetic rubber or a polyester elastomer is added. The solvent-based polyurethane can easily form a high elongation film as compared with the aqueous polyurethane that forms a cross-linked structure.

The solubility in a predetermined solvent corresponds to a rate of dissolution of 70% or more, more preferably 90% or more, the rate of dissolution being obtained by immersing an elastic polymer sheet having a thickness of, for example, 100 µm in a predetermined solvent at room temperature for 24 hours, subsequently filtrating the solvent, drying the resulting residue, measuring the mass, and using the following expression: Rate of dissolution (%) = (1 - Weight of residue/Weight of sheet before immersion in solvent) × 100. Meanwhile, the insolubility in a predetermined solvent corresponds to a rate of dissolution of 30% or less, more preferably 10% or less.

The method for applying a resin solution containing the second elastic polymer to the napped surface of the fiber sheet include gravure coating, bar coating, knife coating, roll coating, comma coating, and spray coating.

The second elastic polymer is applied to the napped surface of the fiber sheet by applying a resin solution containing the second elastic polymer to the napped surface of the fiber sheet, and, if necessary, drying and solidifying the resin solution.

The second elastic polymer may also further contain a colorant such as a dye or a pigment, a coagulation regulator, an antioxidant, an ultraviolet absorber, a fluorescent agent, an antifungal agent, a penetrant, an antifoaming agent, a lubricant, a water-repellent agent, an oil-repellent agent, a thickener, a filler, a curing accelerator, a foaming agent, a water-soluble polymer compound such as polyvinyl alcohol or carboxymethyl cellulose, inorganic fine particles, a conductive agent and the like, so long as the effects of the present invention are not impaired.

The content ratio of the second elastic polymer relative to the mass of the fiber sheet is preferably 0.00001 to 0.01 mass%, more preferably 0.0001 to 0.001 mass%, from the viewpoint of achieving a good balance between the fullness and pliability or the like of the resulting napped artificial leather and appropriately constraining the napped fibers. An excessively high content ratio of the second elastic polymer tends to give rise to a hard surface and generation of fine creases.

Note that the weight per area of the second elastic polymer is preferably 0.0001 to 0.1 times, more preferably 0.001 to 0.05 times the weight per area of the above-described first elastic polymer from the viewpoint of achieving a good balance between the fullness and pliability or the like of the artificial leather and appropriately constraining the napped fibers.

Next, a solvent for dissolving the second elastic polymer is applied to the surface to which the second elastic polymer has been applied. By this step, at least a part of the second elastic polymer that has been applied to the napped surface of the fiber sheet is dissolved and sunk in the direction of the inner layer, and dried and solidified. Then, the second elastic polymer is fixed to the basal portions of the napped ultrafine fibers present on the napped surface. In particular, it is preferable that the second elastic polymer is fixed to the basal portions of the napped ultrafine fibers and is present in the form of a thin film or layer on the surface layer of the napped surface of the fiber sheet. Then, as a result of the basal portions of the ultrafine fibers present on the napped surface being constrained by the second elastic polymer, the ultrafine fibers become less likely to fall off and less likely to stick out from the inside to the outside even when the napped surface is rubbed. As a result, it is possible to suppress the occurrence of pilling in which the detached fibers and the sticking-out fibers form fuzz balls due to the rubbing of the surface.

Examples of the method for applying the solvent for dissolving the second elastic polymer to the surface to which the second elastic polymer has been applied include, but are not particularly limited to, gravure coating, bar coating, knife coating, roll coating, comma coating, and spray coating.

As the solvent for dissolving the second elastic polymer, any solvent having solubility to dissolve the second elastic polymer simply by being applied can be used without any particular limitation. Such a solvent may be selected as appropriate according to the type of the second elastic polymer. Specific examples thereof include ketones such as cyclohexanone and methyl ethyl ketone (MEK), N,N-dimethylformamide (DMF), dimethyl acetamide (DMA), N-methyl pyrrolidone, dimethyl sulfonamide (DMSO), in the case of dissolving a solvent-based polyurethane, for example. A solvent mixture obtained by mixing the above-described solvents at a predetermined ratio may be used, or a poor solvent of the first elastic polymer may be mixed.

While the amount of application of the solvent for dissolving the second elastic polymer may be adjusted as appropriate according to the balance between the desired texture and properties, the thickness or the like, it is preferable that the solvent is applied in an amount of preferably about 1 to 50 g/m², more preferably about 5 to 30 g/m². When the amount of application of the solvent is too large, the second elastic polymer tends to be excessively dissolved and excessively permeated into the inner layer. When the amount of application is too small, the second elastic polymer will not be sufficiently dissolved, and thus, it tends to be difficult for the basal portions of the napped ultrafine fibers to be sufficiently fixed.

In the napped artificial leather of the present embodiment, it is preferable that the second elastic polymer 3 has permeated into the fiber sheet and fixed to the basal portions of the napped ultrafine fibers 1a, and is unevenly distributed in the form of a thin film or layer on the surface layer of the napped surface 1a of the fiber sheet, as shown in the SEM image of FIG. 2, for example. An average thickness of the portion where the second elastic polymer is present in the form of a thin film or layer is preferably 5 to 60 µm, more preferably 10 to 40 µm, from the viewpoint of obtaining a pliable napped artificial leather. When the portion where the second elastic polymer is present is too thick, the surface layer portion tends to be hard, or fine creases tend to be formed on the surface. When the portion where the second elastic polymer is present is too thin, the effect of the napped ultrafine fibers in fixing the second elastic polymer tends to be reduced, resulting in a reduction in the pilling suppressing effect.

In the napped artificial leather of the present embodiment, an average ratio of the thickness of the portion where the second elastic polymer is present, relative to the thickness of the fiber sheet, is preferably 1 to 20%, more preferably 5 to 10%. When the ratio of the thickness of the portion where the second elastic polymer is present relative to the thickness of the fiber sheet is too high, the fiber sheet tends to have a hard texture.

In this manner, a napped artificial leather of the present embodiment is obtained. The length of the napped fibers of the napped artificial leather according to the present embodiment is not particularly limited, but is preferably 1 to 500 µm, more preferably 30 to 200 µm, from the viewpoint of providing a napped artificial leather having fine short fibers resembling those of a natural nubuck leather. Note that the length of the napped fibers can be determined, for example, by capturing a cross-sectional image with a scanning electron microscope (SEM) in a state in which the napped fibers on the surface of the napped artificial leather are manually raised, measuring the length of arbitrarily selected 50 fibers, the length extending from the entangled surface, which is the basal portion, to the upper end thereof, and calculating an average value thereof.

The apparent density of the napped artificial leather according to the present embodiment is preferably 0.4 to 0.7 g/cm³, more preferably 0.5 to 0.6 g/cm³, from the viewpoint of achieving a good balance between pliability and fullness. Furthermore, the weight per area of the napped artificial leather according to the present embodiment is preferably 150 to 1000 g/m², more preferably 200 to 600 g/m², from the viewpoint of achieving a good balance between pliability and fullness.

Note that the napped artificial leather of the present embodiment is dyed as needed. A suitable dye is selected as appropriate according to the type of the ultrafine fibers. For example, when the ultrafine fibers are formed from a polyester resin, it is preferable that the napped artificial leather are dyed with a disperse dye. Specific examples of the disperse dye include benzene azo-based dyes (e.g., monoazo and disazo), heterocyclic azo-based dyes (e.g., thiazole azo, benzothiazole azo, quinoline azo, pyridine azo, imidazole azo, and thiophene azo), anthraquinone-based dyes, and condensate-based dyes (e.g., quinophthalone, styryl, and coumarin). These are commercially available as dyes with the prefix "Disperse", for example. These may be used alone or in a combination of two or more. As the dyeing method, it is possible to use a high-pressure jet dyeing method, a jigger dyeing method, a thermosol continuous dyeing machine method, a dyeing method using a sublimation printing process, and the like without any particular limitation.

The napped artificial leather of the present embodiment may be further subjected to a flexibilizing treatment by crumpling or a relaxing treatment to adjust the texture, or a finishing treatment such as a reverse seal brushing treatment, an antifouling treatment, a hydrophilization treatment, a lubricant treatment, a softener treatment, an antioxidant treatment, an ultraviolet absorber treatment, a fluorescent agent treatment and a flame retardant treatment.

Since the napped fibers that have been once napped are fixed to the surface of the fiber sheet by the second elastic polymer, the napped fibers are less likely to be pulled out even when dyeing or a relaxing treatment is performed.

In this manner, a napped artificial leather of the present embodiment that has been adjusted such that the ultrafine fibers whose basal portions are constrained by the elastic polymer are present on the napped surface is obtained. Such a napped artificial leather can suppress the occurrence of pilling in which the detached fibers or the sticking-out fibers form fuzz balls even when the napped surface is rubbed.

### [Examples]

Hereinafter, the present invention will be described in further detail by way of examples. It should be appreciated that the scope of the present invention is by no means limited by the examples.

### [Example 1]

Ethylene-modified polyvinyl alcohol as a thermoplastic resin serving as a sea component and isophthalic acid-modified PET as a thermoplastic resin serving as an island component were molten separately. Note that the ethylene-modified polyvinyl alcohol had an ethylene unit content of 8.5 mol%, and a degree of polymerization of 380 and a saponification degree of 98.7 mol%. The isophthalic acid-modified PET had an isophthalic acid unit content of 6.0 mol% and a melting point of 110°C. Then, each of the molten resins was supplied to a multicomponent fiber spinning spinneret having many nozzle holes disposed in parallel for forming a cross section on which 25 island component portions having uniform cross-sectional areas were distributed in the sea component. At this time, the molten resins were supplied by adjusting the pressure such that the mass ratio between the molten resin serving as a sea component and the molten resin serving as an island component satisfies Sea component/Island component = 25/75. Then, molten resin strands having a cross section with an island-in-the-sea structure were discharged from the nozzle holes set at a spinneret temperature of 260°C.

Then, the molten resin strands discharged from the nozzle holes were stretched by suction by an air jet nozzle suction apparatus with an air stream pressure regulated so as to provide an average spinning speed of 3700 m/min, and thereby to spin island-in-the-sea composite filaments with a fineness of 2.1 dtex. The spun island-in-the-sear composite filaments were continuously piled on a movable net while being suctioned from the back side of the net. The piled amount was regulated by regulating the movement speed of the net. Then, in order to suppress the fuzzing on the surface, the island-in-the-sea composite filaments piled on the net were softly pressed with a metal roll at 42°C. Then, the island-in-the-sea composite filaments were removed from the net, and allowed to pass between a grid-patterned metal roll having a surface temperature of 75°C and a back roll, thereby hot pressing the fibers with a linear load of 200 N/mm. In this manner, a filament web having a weight per area of 34 g/m² and in which the fibers on the surface were temporarily fused in a grid pattern was obtained.

Next, an oil solution mixed with an antistatic agent was sprayed to the surface of the obtained filament web. Then, 10 sheets of the filament web were stacked by using a cross lapper apparatus to form a superposed web with a weight per area of 340 g/m², and an oil solution for preventing the needle from breaking was further sprayed thereto. Then, the superposed filament web was needle-punched, thereby performing a three-dimensional entangling treatment. Specifically, the stacked body was needle-punched at a density of 3300 punch/cm² alternately from both sides by using 6-barb needles with a distance of 3.2 mm from the needle tip to the first barb at a punching depth of 8.3 mm. The area shrinkage by the needle punching was 18%, and the weight per area of the entangled web after the needle punching was 415 g/m².

The obtained entangled web was densified by being subjected to a heat-moisture shrinking treatment Specifically, water at 18°C was uniformly sprayed in an amount of 10 mass% to the entangled web, and the entangled web was heat-treated by being stood still in an atmosphere with a temperature of 70°C and a relative humidity of 95% for 3 minutes with no tension applied, thereby heat-moist shrinking the entangled web so as to increase the fiber density. The area shrinkage by the heat-moisture shrinking treatment was 45%, and the densified entangled web had a weight per area of 750 g/m² and an apparent density of 0.52 g/cm³. Then, for further densification, the entangled web was pressed with a dry-heat roll, thereby adjusting the apparent density to 0.60 g/cm³.

Next, an emulsion of the first elastic polymer with a solid content concentration of 30% was impregnated into the densified entangled web. Note that the first elastic polymer was an aqueous polyurethane composed mainly of a polycarbonate/ether polyurethane capable of forming a cross-linked structure after being solidified and having a rate of dissolution of 5% in a solvent mixture described below. Then, the impregnated emulsion of the first elastic polymer was dried in a dryer machine at 150°C, thereby solidifying the aqueous polyurethane in the densified entangled web.

Next, the entangled web to which the aqueous polyurethane had been applied was immersed in hot water at 95°C for 20 minutes, thereby removing the sea component contained in the island-in-the-sea composite filaments by extraction. Then, the entangled web was dried in a dryer machine at 120°C, thereby obtaining a fiber sheet that included a non-woven fabric of ultrafine filaments with a fineness of 0.08 dtex and to which the aqueous polyurethane had been applied. The mass ratio of the non-woven fabric to the aqueous polyurethane in the fiber sheet was 87/13. Then, the fiber sheet was sliced into halves in the thickness direction, and the surface thereof was napped by being buffed with sand paper with a number of 600.

Next, as a solution containing the second elastic polymer, a solution of a solvent-based polyurethane substantially completely soluble in a solvent mixture of 5% DMF and 95% cyclohexanone was prepared as follows

260 parts by mass of polyester diol with a number-average molecular weight of 2000, 620 parts by mass of polyhexylene carbonate with a number-average molecular weight of 2000, 580 parts by mass of polybutylene adipate with a number-average molecular weight of 2000, 540 parts by mass of polytetramethylene glycol with a number-average molecular weight of 2000, 217 parts by mass of ethylene glycol, 1149 parts by mass of diphenyl methane-4,4'-diisocyanate, and 10100 parts by mass of DMF were charged into a reactor, and allowed to react under a stream of nitrogen, to produce a polyurethane solution with a weight-average molecular weight of 360000. Note that the polyester diol with a number-average molecular weight of 2000 contained an equimolar mixture of N-methyldiethanolamine and 3-methyl-1,5-pentane diol as the diol component and sebacic acid as the dicarboxylic acid component.

Then, cyclohexanone was added to the polyurethane solution to adjust the solid content to 5%. Then, the polyurethane solution with a solid content of 5% was applied in an amount of 11 g/m² to the outer side of the napped surface of the fiber sheet by using a 200-mesh gravure coater, and subsequently dried. At this time, the weight per area ratio of the solvent-based polyurethane to the aqueous polyurethane provided earlier (solvent-based polyurethane/aqueous polyurethane) was 0.012 times.

Then, the solvent mixture of 5% DMF and 95% cyclohexanone for dissolving the solvent-based polyurethane was applied in an amount of 10 g/m² to the outer side of the napped surface of the non-woven fabric by using a 200-mesh gravure coater, and subsequently dried.

Then, the napped artificial leather was scalded in hot water at 80°C for 20 minutes to relax the leather with the hot water, and subsequently dyed into black by using a high-pressure jet dyeing machine (circular dyeing machine from HISAKA WORKS, LTD.).

In this manner, a dyed napped artificial leather that included a non-woven fabric of ultrafine filaments with a fineness of 0.08 dtex and had a napped surface on one surface was obtained. FIG. 2 shows an SEM image showing a cross section, in the thickness direction, of the napped artificial leather obtained in Example 1. The obtained napped artificial leather had a thickness of 0.6 mm, a weight per area of 350 g/m², and an apparent density of 0.58 g/cm³. The length of the napped fibers was about 80 µm. The second elastic polymer was permeated into the fiber sheet, was fixed to the basal portions of the napped ultrafine fibers, and was unevenly distributed in the forms of a layer on the surface layer of the fiber sheet. The average thickness of that layer was 25 µm.

Then, the obtained napped artificial leather was evaluated for the pilling resistance, the surface appearance, and the texture in the following manner. The results are summarized in Table 1.

### [Pilling resistance]

Testing was performed by using a Martindale abrasion tester in accordance with ISO 12945-2, and evaluation was made according to the following grading criteria.
5: No change was observed.
4: Slight surface fuzzing and/or fuzz balls formed in some portions of the surface were observed.
3: Medium level of surface fuzzing and/or medium level of pilling, and fuzz balls with various sizes and densities appearing in some portions of the test strip surface were observed.
2: Clear surface fuzzing and/or dear pilling, and fuzz balls with various sizes and densities were observed in most portions of the test strip surface.
1: Dense surface fuzzing and/or significant pilling, and fuzz balls with various sizes and densities covering the entire surface of the test strip were observed.

### [Surface appearance]

The appearance of the obtained napped artificial leather was observed visually, and evaluated according to the following criteria.
3: Nubuck-like, fine short fibers were observed.
2: Suede-like, somewhat coarse napped fibers were observed, or some creases were observed on the surface.
1: The nap length was clearly uneven, or creases were prominently observed.

### [Texture]

The obtained napped artificial leather was bent, and the differences in elasticity and flexibility compared with a napped natural leather were evaluated according to the following criteria.
3: A texture with a good balance between fullness and flexibility, close to the texture of the napped natural leather, was observed.
2: Atexture harder than that of the napped natural leather was observed.
1: A texture with poorer fullness than that of the napped natural leather was observed.

**[Table 1]**

| Example No. | First elastic polymer | Second elastic polymer | Weight per area ratio between polymer elastic bodies (Second/First) | Solvent application step | Fiber length | Nap length | Evaluation results | | |
|---|---|---|---|---|---|---|---|---|---|
| | | | | | mm | µm | Pilling resistance (5 to 1) | Surface appearance (3 to 1) | Texture (3 to 1) |
| 1 | Aqueous polyurethane | Solvent-based polyurethane | 0.012 | Performed | filament | 80 | 5 | 3 | 3 |
| 2 | Aqueous polyurethane | Solvent-based polyurethane | 0.012 | Performed | 51 | 80 | 5 | 3 | 3 |
| 3 | Solvent-based polyurethane | Solvent-based polyurethane | 0.012 | Performed | filament | 60 | 5 | 2 | 3 |
| 4 | Aqueous polyurethane | Solvent-based polyurethane | 0.025 | Performed | filament | 40 | 5 | 2 | 3 |
| 5 | Aqueous polyurethane | Solvent-based polyurethane | 0.004 | Performed | filament | 180 | 4 | 3 | 3 |
| 6 | Aqueous polyurethane | Solvent-based polyurethane | 0.0012 | Performed | filament | 300 | 4 | 2 | 3 |
| 7 | Aqueous polyurethane | Solvent-based polyurethane | 0.05 | Performed | filament | 20 | 5 | 2 | 3 |
| Com. Ex. 1 | Aqueous polyurethane | Solvent-based polyurethane | 0.012 | Not performed | filament | 20 | 3 | 2 | 3 |
| Com. Ex. 2 | Aqueous polyurethane | Aqueous polyurethane | 0.012 | Performed | filament | 300 | 4 | 2 | 3 |
| Com. Ex. 3 | Aqueous polyurethane | - | - | Performed | filament | 400 | 3 | 2 | 3 |

### [Example 2]

Using ethylene-modified polyvinyl alcohol as a thermoplastic resin serving as a sea component and isophthalic acid-modified PET as a thermoplastic resin serving as an island component, an island-in-the-sea composite fiber was melt-spun such that the mass ratio between the sea component and the island component satisfied Sea component/Island component = 25/75, then stretched, crimped and cut, thereby obtaining short fibers (staples) of island-in-the-sea composite fibers with a fineness of 2.1 dtex and an average fiber length of 51 mm.

Then, the obtained short fibers were formed into a cross-lapped web by using a webber, and needle-punched at a density of 700 punch/cm² by using a needle puching machine, to obtain an entangled web with a weight per area of 407 g/m².

Then, a napped artificial leather including a non-woven fabric having a napped surface on one surface was obtained in the same manner as in Example 1 except that the entangled web with a weight per area of 407 g/m² obtained as above was used in place of the entangled web with a weight per area of 415 g/m² used in Example 1. The obtained napped artificial leather had a thickness of 0.6 mm, a weight per area of 340 g/m², and an apparent density of 0.57 g/cm³ The length of the napped fibers was about 80 µm. The second elastic polymer was permeated in the fiber sheet, was fixed to the basal portions of the napped ultrafine fibers, and was unevenly distributed in the form of a layer on the surface layer of the fiber sheet. The average thickness of that layer was 25 µm.

Then, the obtained napped artificial leather was evaluated in the same manner as in Example 1. The results are shown in Table 1.

### [Example 3]

A napped artificial leather including a non-woven fabric having a napped surface on one surface was obtained in the same manner as in Example 1 except that the solvent-based polyurethane used as the second elastic polymer in Example 1 was impregnated as the first elastic polymer into the densified entangled web such that the mass ratio of the modified PET to the solvent-based polyurethane was 87/13 instead of impregnating the emulsion of the aqueous polyurethane as the first elastic polymer in Example 1. The obtained napped artificial leather had a thickness of 0.6 mm, a weight per area of 350 g/m², and an apparent density of 0.58 g/cm³. The length of the napped fibers was about 60 µm. The second elastic polymer was permeated into the fiber sheet, was fixed to the basal portions of the napped ultrafine fibers, and was unevenly distributed in the form of a layer on the surface layer of the fiber sheet. The average thickness of that layer was 22 µm.

Then, the obtained napped artificial leather was evaluated in the same manner as in Example 1. The results are shown in Table 1.

### [Example 4]

A napped artificial leather including a non-woven fabric having a napped surface on one surface was obtained in the same manner as in Example 1 except that the weight per area ratio of the solvent-based polyurethane to the aqueous polyurethane (solvent-based polyurethane/aqueous polyurethane) was changed from 0.012 times used in Example 1 to 0.025 times. The obtained napped artificial leather had a thickness of 0.6 mm, a weight per area of 350 g/m², and an apparent density of 0.58 g/cm³. The length of the napped fibers was about 40 µm. The second elastic polymer was permeated into the fiber sheet, was fixed to the basal portions of the napped ultrafine fibers, and was unevenly distributed in the form of a layer on the surface layer of the fiber sheet. The average thickness of that layer was 35 µm.

Then, the obtained napped artificial leather was evaluated in the same manner as in Example 1. The results are shown in Table 1.

### [Example 5]

A napped artificial leather including a non-woven fabric having a napped surface on one surface was obtained in the same manner as in Example 1 except that the weight per area ratio of the solvent-based polyurethane to the aqueous polyurethane (solvent-based polyurethane/aqueous polyurethane) was changed from 0.012 times used in Example 1 to 0.004 times. The obtained napped artificial leather had a thickness of 0.6 mm, a weight per area of 350/m², and an apparent density of 0.58 g/cm³. The length of the napped fibers was about 180 µm. The second elastic polymer was permeated into the fiber sheet, was fixed to the basal portions of the napped ultrafine fibers, and was unevenly distributed in the form of a layer on the surface layer of the fiber sheet. The average thickness of that layer was 15 µm.

Then, the obtained napped artificial leather was evaluated in the same manner as in Example 1. The results are shown in Table 1.

### [Example 6]

A napped artificial leather including a non-woven fabric having a napped surface on one surface was obtained in the same manner as in Example 1 except that the weight per area ratio of the solvent-based polyurethane to the aqueous polyurethane (solvent-based polyurethane/aqueous polyurethane) was changed from 0.012 times used in Example 1 to 0.0012 times. The obtained napped artificial leather had a thickness of 0.6 mm, a weight per area of 350 g/m², and an apparent density of 0.58 g/cm³. The length of the napped fibers was about 300 µm. The second elastic polymer was permeated into the fiber sheet, was fixed to the basal portions of the napped ultrafine fibers, and was unevenly distributed in the form of a layer on the surface layer of the fiber sheet. The average thickness of that layer was 10 µm.

Then, the obtained napped artificial leather was evaluated in the same manner as in Example 1. The results are shown in Table 1.

### [Example 7]

A napped artificial leather including a non-woven fabric having a napped surface on one surface was obtained in the same manner as in Example 1 except that the weight per area ratio of the solvent-based polyurethane to the aqueous polyurethane (solvent-based polyurethane/aqueous polyurethane) was changed from 0.012 times used in Example 1 to 0.05 times. The obtained napped artificial leather had a thickness of 0.6 mm, a weight per area of 355 g/m², and an apparent density of 0.59 g/cm³. The length of the napped fibers was about 20 µm. The second elastic polymer was permeated into the fiber sheet, was fixed to the basal portions of the napped ultrafine fibers, and was unevenly distributed in the form of a layer on the surface layer of the fiber sheet. The average thickness of that layer was 45 µm.

Then, the obtained napped artificial leather was evaluated in the same manner as in Example 1. The results are shown in Table 1.

### [Comparative Example 1]

A napped artificial leather including a non-woven fabric having a napped surface on one surface was obtained in the same manner as in Example 1 except that the step of applying the solvent mixture performed in Example 1 was omitted. The obtained napped artificial leather had a thickness of 0.6 mm, a weight per area of 350 g/m², and an apparent density of 0.58 g/cm³. The length of the napped fibers was about 20 µm, but exhibited uneven nap and had prominent small creases on the surface. Although the second elastic polymer was fixed to the upper portions and the basal portions of the napped ultrafine fibers and unevenly distributed in the form of a layer on the surface layer of the fiber sheet, the permeation of the second elastic polymer in the thickness direction of the fiber sheet was not observed.

Then, the obtained napped artificial leather was evaluated in the same manner as in Example 1. The results are shown in Table 1.

### [Comparative Example 2]

A napped artificial leather including a non-woven fabric having a napped surface on one surface was obtained in the same manner as in Example 1 except that an emulsion of an aqueous polyurethane that was the same as the one used as the first elastic polymer in Example 1 was applied instead of applying the solvent-based polyurethane as the second elastic polymer in Example 1. The obtained napped artificial leather had a thickness of 0.6 mm and a weight per area of 350 g/m². The length of the napped fibers was about 300 µm. The second elastic polymer was discontinuously fixed to the upper portions of the napped ultrafine fibers, and the permeation of the second elastic polymer in the thickness direction of the fiber sheet was not observed. Also, a partial detachment was observed during dyeing.

Then, the obtained napped artificial leather was evaluated in the same manner as in Example 1. The results are shown in Table 1.

### [Comparative Example 3]

A napped artificial leather including a non-woven fabric having a napped surface on one surface was obtained in the same manner as in Example 1 except that a solvent mixture that was the same as the one used in Example 1 was applied, without applying the second elastic polymer. The obtained napped artificial leather had a thickness of 0.6 mm and a weight per area of 350 g/m². The length of the napped fibers was about 400 µm.

Then, the obtained napped artificial leather was evaluated in the same manner as in Example 1. The results are shown in Table 1.

All of the napped artificial leathers obtained in Examples 1 to 7 had grade 4 or above according to the pilling resistance grading criteria, and had high pilling resistance. Note that since Example 3 used the solvent-based polyurethane soluble in the solvent as the first elastic polymer, the application of the solvent caused the first polymer to be partially dissolved, and as a result, a somewhat hard texture with fine creases on the surface was observed. The napped artificial leather obtained in Example 6, which had a low weight per area ratio of the solvent-based polyurethane to the aqueous polyurethane, exhibited a weak constraint on the napped ultrafine fibers and thus had grade 4, which was somewhat low, according to the pilling resistance grading criteria. The napped artificial leather obtained in Example 7, which had a high weight per area ratio of the solvent-based polyurethane to the aqueous polyurethane, had a somewhat hard surface, and as a result, fine creases were observed on the surface.

On the other hand, the napped artificial leather of Comparative Example 1, in which the step of applying the solvent mixture for dissolving the solvent-based polyurethane to the outer side of the napped surface was omitted, had grade 3 according to the pilling resistance grading criteria. The napped artificial leather of Comparative Example 2, in which the aqueous polyurethane insoluble in the solvent was applied to the outer side of the napped surface instead of applying the solvent-based polyurethane, had grade 2 according to the surface appearance grading criteria. From the results of Example 1 and Comparative Examples 1 and 2, it can be seen that, in order to improve the pilling resistance and obtain fine nubuck, the elastic polymer needs to be dissolved in the solvent and be permeated in the direction of the inner layer so as to be solidified at the basal portions of the ultrafine fibers. The napped artificial leather obtained in Comparative Example 3, in which the application of the elastic polymer was omitted and only the solvent was applied, had a long nap length and exhibited an uneven nap.

The production method of a napped artificial leather described in detail thus far includes the steps of: providing a fiber sheet including a non-woven fabric of ultrafine fibers with a fineness of 1 dtex or less that has been impregnated with a first elastic polymer napping one or both surfaces of the fiber sheet to form a napped surface thereon; applying, to the napped surface, a resin solution containing a second elastic polymer having solubility in a predetermined solvent; and applying the solvent to the surface to which the resin solution is applied. With this production method of a napped artificial leather, the second elastic polymer provided in the surface layer of the napped surface is dissolved and permeated in the direction of inner layer by application of the solvent, and subsequently solidified by evaporation of the solvent, and thereby fixed to the vicinity of the basal portions of the napped ultrafine fibers. Then, the napped ultrafine fibers are constrained by the second elastic polymer, and thus become less likely to be detached or to stick out to the outside even when the napped surface is rubbed. As a result, it is possible to suppress the occurrence of so-called pilling in which ultrafine fibers are detached or stick out by the surface being rubbed, and the ultrafine fibers are entangled to form masses.

Preferably, the first elastic polymer that is pre-impregnated into the fiber sheet is an elastic polymer having insolubility in the solvent. When the first elastic polymer is soluble in the solvent, the first elastic polymer is also dissolved, together with the second elastic polymer, by the application of the solvent. Accordingly, the texture becomes hard, for example, and it tends be difficult to control the product quality control.

It is preferable that the first elastic polymer is an elastic polymer that forms a cross-linked structure, and the second elastic polymer is an elastic polymer that does not form a cross-linked structure, since the first elastic polymer is less likely to be dissolved in the above-described solvent and the second elastic polymer is likely to be dissolved in the solvent.

The first elastic polymer is preferably, for example, an aqueous polyurethane, and the second elastic polymer is preferably a solvent-based polyurethane, since the resulting napped artificial leather has well-balanced properties, and an aqueous polyurethane, in general, forms a cross-linked structure and thus has low solubility, whereas a solvent-based polyurethane does not form a cross-linked structure and thus has high solubility.

It is preferable that the ultrafine fibers are filaments in that the ultrafine fibers tend not to fall off.

It is preferable that the second elastic polymer has a weight per area that is 0.0001 to 0.05 times a weight per area of the first elastic polymer, from the viewpoint of improving the pilling resistance while preventing the texture from becoming too hard.

A napped artificial leather indudes a fiber sheet obtained by impregnating a first elastic polymer into a non-woven fabric that is an entangled body of ultrafine fibers with a fineness of 1 dtex or less, wherein the fiber sheet includes, on one or both surfaces thereof, a napped surface formed by the napped ultrafine fibers, and further includes a second elastic polymer that is fixed to basal portions of the napped ultrafine fibers and is unevenly distributed on a surface layer of the fiber sheet, wherein the first elastic polymer has insolubility in a predetermined solvent corresponding to a rate of dissolution of 30% or less, and the second elastic polymer has a solubility in the solvent corresponding to a rate of dissolution of 70% or more.

Such a napped artificial leather has excellent pilling resistance.

It is preferable that the napped ultrafine fibers have a nap length of 30 to 200 µm since a napped artificial leather have fine short fibers resembling those of a natural nubuck leather can be obtained.

### [Industrial Applicability]

A napped artificial leather obtained by the present invention can be preferably used as a skin material for clothing, shoes, articles of furniture, car sheets, general merchandise, and the like.

### [Reference Signs List]

- 1a: Ultrafine fibers
- 1: Non-woven fabric
- 2: First elastic polymer
- 3: Second elastic polymer
- 10: Napped artificial leather
- s: Napped surface

## Claims

1. A production method of a napped artificial leather, comprising the steps of:
providing a fiber sheet including a non-woven fabric of ultrafine fibers with a fineness of 1 dtex or less that has been impregnated with a first elastic polymer;
napping one or both surfaces of the fiber sheet to form a napped surface thereon;
applying, to the napped surface, a resin solution containing a second elastic polymer having solubility in a predetermined solvent; and
applying the solvent to the surface to which the resin solution is applied.

2. The production method of a napped artificial leather in accordance with claim 1, wherein the first elastic polymer is an elastic polymer having insolubility in the solvent.

3. The production method of a napped artificial leather in accordance with claim 2, wherein the solubility corresponds to a rate of dissolution in the solvent of 90% or more, and the insolubility corresponds to a rate of dissolution in the solvent of 10% or less.

4. The production method of a napped artificial leather in accordance with claim 2, wherein the first elastic polymer is an elastic polymer that forms a cross-linked structure, and the second elastic polymer is an elastic polymer that does not form a cross-linked structure.

5. The production method of a napped artificial leather in accordance with claim 1, wherein the first elastic polymer is an aqueous polyurethane, and the second elastic polymer is a solvent-based polyurethane.

6. The production method of a napped artificial leather in accordance with claim 1, wherein the ultrafine fibers are filaments.

7. The production method of a napped artificial leather in accordance with claim 1, wherein the second elastic polymer has a weight per area that is 0.001 to 0.05 times a weight per area of the first elastic polymer.

8. A napped artificial leather comprising
a fiber sheet obtained by impregnating a first elastic polymer into a non-woven fabric that is an entangled body of ultrafine fibers with a fineness of 1 dtex or less, wherein the fiber sheet includes, on one or both surfaces thereof, a napped surface formed by the napped ultrafine fibers, and
further includes a second elastic polymer that is fixed to basal portions of the napped ultrafine fibers and is unevenly distributed on a surface layer of the fiber sheet, wherein the first elastic polymer has insolubility in a predetermined solvent corresponding to a rate of dissolution of 30% or less, and the second elastic polymer has solubility in the solvent corresponding to a rate of dissolution of 70% or more.

9. The napped artificial leather in accordance with claim 8,
wherein the solubility corresponds to a rate of dissolution in the solvent of 90% or more, and the insolubility corresponds to a rate of dissolution in the solvent of 10% or less.

10. The napped artificial leather in accordance with claim 8,
wherein the first elastic polymer is an aqueous polyurethane, and the second elastic polymer is a solvent-based polyurethane.

11. The napped artificial leather in accordance with claim 10,
wherein the aqueous polyurethane has a cross-linked structure, and the solvent-based polyurethane does not have a cross-linked structure.

12. The napped artificial leather in accordance with claim 8,
wherein the second elastic polymer is permeated into and unevenly distributed on the surface layer of the fiber sheet in a form of a layer or film, and a region where the second elastic polymer is permeated into and unevenly distributed has an average thickness of 5 to 60 µm.

13. The napped artificial leather in accordance with claim 8,
wherein the ultrafine fibers are filaments.

14. The napped artificial leather in accordance with claim 8,
wherein the second elastic polymer has a weight per area that is 0.001 to 0.05 times a weight per area of the first elastic polymer.

15. The napped artificial leather in accordance with claim 8,
wherein the napped ultrafine fibers have a nap length of 30 to 200 µm.

## Patentansprüche

1. Ein Herstellungsverfahren für ein Nappa-Kunstleder, umfassend die Schritte:
Bereitstellen einer Faserbahn, die ein Vlies aus ultrafeinen Fasern mit einer Feinheit von 1 dtex oder weniger beinhaltet, das mit einem ersten elastischen Polymer getränkt wurde,
Aufrauen einer oder beider Oberflächen der Faserbahn, um eine aufgeraute Oberfläche darauf zu bilden;
Aufbringen einer Harzlösung, die ein zweites elastisches Polymer mit Löslichkeit in einem vorher festgelegten Lösungsmittel enthält, auf die aufgeraute Oberfläche; und
Aufbringen des Lösungsmittels auf die Oberfläche, auf die die Harzlösung aufgebracht ist.

2. Das Herstellungsverfahren für ein Nappa-Kunstleder nach Anspruch 1,
wobei das erste elastische Polymer ein elastisches Polymer mit Unlöslichkeit in dem Lösungsmittel ist.

3. Das Herstellungsverfahren für ein Nappa-Kunstleder nach Anspruch 2,
wobei die Löslichkeit einer Lösungsrate in dem Lösungsmittel von 90% oder mehr entspricht und die Unlöslichkeit einer Lösungsrate in dem Lösungsmittel von 10% oder weniger entspricht.

4. Das Herstellungsverfahren für ein Nappa-Kunstleder nach Anspruch 2,
wobei das erste elastische Polymer ein elastisches Polymer ist, das eine vernetzte Struktur bildet, und das zweite elastische Polymer ein elastisches Polymer ist, das keine vernetzte Struktur bildet.

5. Das Herstellungsverfahren für ein Nappa-Kunstleder nach Anspruch 1,
wobei das erste elastische Polymer ein wässriges Polyurethan ist und das zweite elastische Polymer ein Polyurethan auf Lösungsmittelbasis ist.

6. Das Herstellungsverfahren für ein Nappa-Kunstleder nach Anspruch 1,
wobei die ultrafeinen Fasern Fäden sind.

7. Das Herstellungsverfahren für ein Nappa-Kunstleder nach Anspruch 1,
wobei das zweite elastische Polymer ein Flächengewicht aufweist, welches das 0,001-bis 0,05-Fache eines Flächengewichts des ersten elastischen Polymers ist.

8. Ein Nappa-Kunstleder, umfassend
eine Faserbahn, erhalten durch Tränken eines Vlieses, bei dem es sich um einen verwobenen Körper aus ultrafeinen Fasern mit einer Feinheit von 1 dtex oder weniger handelt, mit einem ersten elastischen Polymer,
wobei die Faserbahn auf einer oder beiden Oberflächen derselben eine durch die aufgerauten ultrafeinen Fasern gebildete aufgeraute Oberfläche beinhaltet und weiter ein zweites elastisches Polymer beinhaltet, das an unteren Bereichen der aufgerauten ultrafeinen Fasern befestigt ist und ungleichmäßig auf einer Oberflächenschicht der Faserbahn verteilt ist,
wobei das erste elastische Polymer Unlöslichkeit in einem vorher festgelegten Lösungsmittel aufweist, die einer Lösungsrate von 30% oder weniger entspricht, und das zweite elastische Polymer Löslichkeit in dem Lösungsmittel aufweist, die einer Lösungsrate von 70% oder mehr entspricht.

9. Das Nappa-Kunstleder nach Anspruch 8,
wobei die Löslichkeit einer Lösungsrate in dem Lösungsmittel von 90% oder mehr entspricht und die Unlöslichkeit einer Lösungsrate in dem Lösungsmittel von 10% oder weniger entspricht.

10. Das Nappa-Kunstleder nach Anspruch 8,
wobei das erste elastische Polymer ein wässriges Polyurethan ist und das zweite elastische Polymer ein Polyurethan auf Lösungsmittelbasis ist.

11. Das Nappa-Kunstleder nach Anspruch 10,
wobei das wässrige Polyurethan eine vernetzte Struktur aufweist und das Polyurethan auf Lösungsmittelbasis keine vernetzte Struktur aufweist.

12. Das Nappa-Kunstleder nach Anspruch 8,
wobei das zweite elastische Polymer die Oberflächenschicht der Faserbahn durchdringt und unregelmäßig in Form einer Schicht oder eines Films darauf verteilt ist, und ein Bereich, in den das zweite elastische Polymer eingedrungen und ungleichmäßig darin verteilt ist, eine mittlere Dicke von 5 bis 60 µm aufweist.

13. Das Nappa-Kunstleder nach Anspruch 8,
wobei die ultrafeinen Fasern Fäden sind.

14. Das Nappa-Kunstleder nach Anspruch 8,
wobei das zweite elastische Polymer ein Flächengewicht aufweist, welches das 0,001-bis 0,05-Fache eines Flächengewichts des ersten elastischen Polymers ist.

15. Das Nappa-Kunstleder nach Anspruch 8,
wobei die aufgerauten ultrafeinen Fasern eine Noppenlänge von 30 bis 200 µm aufweisen.

## Revendications

1. Procédé de production d'un cuir artificiel duveté, comprenant les étapes de:
fourniture d'une feuille de fibre comportant une étoffe non tissée de fibres ultrafines d'une finesse de 1 dtex ou moins qui a été imprégnée d'un premier polymère élastique;
duvetage d'une ou des deux surfaces de la feuille de fibre pour former une surface duvetée sur celle-ci;
application, à la surface duvetée, d'une solution de résine contenant un second polymère élastique ayant une solubilité dans un solvant prédéterminé; et
application du solvant à la surface à laquelle la solution de résine est appliquée.

2. Procédé de production d'un cuir artificiel duveté selon la revendication 1,
dans lequel le premier polymère élastique est un polymère élastique ayant une insolubilité dans le solvant.

3. Procédé de production d'un cuir artificiel duveté selon la revendication 2,
dans lequel la solubilité correspond à un taux de dissolution dans le solvant de 90 % ou plus, et l'insolubilité correspond à un taux de dissolution dans le solvant de 10 % ou moins.

4. Procédé de production d'un cuir artificiel duveté selon la revendication 2,
dans lequel le premier polymère élastique est un polymère élastique qui forme une structure réticulée, et le second polymère élastique est un polymère élastique qui ne forme pas de structure réticulée.

5. Procédé de production d'un cuir artificiel duveté selon la revendication 1,
dans lequel le premier polymère élastique est un polyuréthane aqueux, et le second polymère élastique est un polyuréthane à base de solvant.

6. Procédé de production d'un cuir artificiel duveté selon la revendication 1,
dans lequel les fibres ultrafines sont des filaments.

7. Procédé de production d'un cuir artificiel duveté selon la revendication 1,
dans lequel le second polymère élastique a un poids par surface qui est de 0,001 à 0,05 fois un poids par surface du premier polymère élastique.

8. Cuir artificiel duveté comprenant
une feuille de fibre obtenue en imprégnant un premier polymère élastique dans une étoffe non tissée qui est un corps enchevêtré de fibres ultrafines d'une finesse de 1 dtex ou moins,
dans lequel la feuille de fibre comporte, sur l'une de ses surfaces ou les deux, une surface duvetée formée par les fibres ultrafines duvetées, et
comporte en outre un second polymère élastique qui est fixé à des portions de base des fibres ultrafines duvetées et est réparti irrégulièrement sur une couche de surface de la feuille de fibre,
dans lequel le premier polymère élastique a une insolubilité dans un solvant prédéterminé correspondant à un taux de dissolution de 30 % ou moins, et le second polymère élastique a une solubilité dans le solvant correspondant à un taux de dissolution de 70 % ou plus.

9. Cuir artificiel duveté selon la revendication 8,
dans lequel la solubilité correspond à un taux de dissolution dans le solvant de 90 % ou plus, et l'insolubilité correspond à un taux de dissolution dans le solvant de 10 % ou moins.

10. Cuir artificiel duveté selon la revendication 8,
dans lequel le premier polymère élastique est un polyuréthane aqueux, et le second polymère élastique est un polyuréthane à base de solvant.

11. Cuir artificiel duveté selon la revendication 10,
dans lequel le polyuréthane aqueux a une structure réticulée et le polyuréthane à base de solvant n'a pas de structure réticulée.

12. Cuir artificiel duveté selon la revendication 8,
dans lequel le second polymère élastique est infiltré dans et réparti irrégulièrement sur la couche de surface de la feuille de fibre sous forme de couche ou de film, et une région dans laquelle le second polymère élastique est infiltré et réparti irrégulièrement a une épaisseur moyenne de 5 à 60 µm.

13. Cuir artificiel duveté selon la revendication 8,
dans lequel les fibres ultrafines sont des filaments.

14. Cuir artificiel duveté selon la revendication 8,
dans lequel le second polymère élastique a un poids par surface qui est de 0,001 à 0,05 fois un poids par surface du premier polymère élastique.

15. Cuir artificiel duveté selon la revendication 8,
dans lequel les fibres ultrafines duvetées ont une longueur de duvet de 30 à 200 µm.
